# EUROPÄISCHE PATENTSCHRIFT

(11) **EP 4 015 341 B1**
(45) Veröffentlichungstag und Bekanntmachung des Hinweises auf die Patenterteilung: **22.05.2024**
(21) Anmeldenummer: 21211190.0
(22) Anmeldetag: 30.11.2021
(51) Int. Cl.: B61F 5/50, B61F 9/00, B65G 39/20, B60B 33/00

(54) **FAHRWERK FÜR EIN SCHIENENGEBUNDENES TRANSPORTFAHRZEUG**
RUNNING GEAR FOR A RAILWAY TRANSPORT VEHICLE
TRAIN DE ROULEMENT POUR UN VÉHICULE DE TRANSPORT SUR RAILS

(30) Priorität: 21.12.2020 AT 2802020
(43) Veröffentlichungstag der Anmeldung: 22.06.2022
(73) Patentinhaber: Faigle Kunststoffe GmbH, 6971 Hard (AT)
(72) Erfinder: Kienreich, Tobias, 6912 Hörbranz (AT)
(74) Vertreter: Torggler & Hofmann Patentanwälte - Rankweil

(56) Entgegenhaltungen:
- WO-A1-2016/068705
- DE-B- 1 150 403
- DE-C- 849 568

## Beschreibung

Die vorliegende Erfindung betrifft ein Fahrwerk gemäß des Oberbegriffs des Patentanspruchs 1.

Insbesondere in der Intralogistik, also beim Warentransport innerhalb eines Lagers oder eines Betriebsgeländes werden beim Stand der Technik schienengebundene Transportfahrzeuge eingesetzt, welche mit einem entsprechenden Fahrwerk auf einem Schienensystem fahren, um so Waren von einem Ort zum anderen Ort innerhalb eines Betriebsgeländes und insbesondere innerhalb eines Lagers zu transportieren. Dabei muss das Fahrwerk grundsätzlich auch dazu geeignet sein, entlang von Kurven im Schienensystem zu fahren.

Aus der WO 2016/068705 A1 ist ein Fahrwerk bekannt, bei dem die auf den Schienen abrollenden Laufrollen des Fahrwerks einerseits in einem Schwenkarm um ihre Laufrollenrotationsachsen drehbar gelagert sind und der Schwenkarm andererseits samt Laufrolle mittels eines Schwenkgelenks schwenkbar an der Fahrzeugachse gelagert ist.

Die Fahrwerke für solche schienengebundenen Transportfahrzeuge müssen in der Regel relativ flach über den Schienen gebaut sein. Insbesondere wenn die Transportfahrzeuge induktiv angetrieben werden, sind relativ geringe Toleranzen zu berücksichtigen. Beim Stand der Technik müssen aus diesem Grund die Schwenkgelenke aus relativ teuren Schrägkugellagern ausgebildet werden, damit die durch das Transportfahrzeug und die darin transportierten Waren entstehenden Auflasten über das Schwenkgelenk auf die Laufrolle und damit auf die Schiene übertragen werden können.

Ein gattungsgemäßes Fahrwerk ist aus der DE 11 50 403 B bekannt.

Aufgabe ist es, ein gattungsgemäßes Fahrwerk bezüglich der Fahrt durch Kurven weiter zu verbessern.

Hierzu schlägt die Erfindung ein Fahrwerk gemäß Patentanspruch 1 vor.

Es ist somit eine Grundidee, die durch das Transportfahrzeug und die darin transportierten Waren entstehende Auflast auf den Laufrollen nicht allein über das Schwenkgelenk sondern zusätzlich noch über ein Stützlager zu übertragen, wobei die Laufrolle zwischen dem Schwenkgelenk und dem Stützlager angeordnet ist. Hierdurch wird das Schwenkgelenk selbst deutlich entlastet. Es kann auf die beim Stand der Technik notwendigen, relativ teuren Schrägkugellager im Schwenkgelenk verzichtet werden, da ein Teil der Last eben über das zusätzlich vorhandene Stützlager übertragen wird.

Das erfindungsgemäße Fahrwerk kann eine einzelne Fahrwerkachse, aber auch mehrere Fahrwerkachsen, welche über das Transportfahrzeug selbst oder einen entsprechenden Längsträger miteinander verbunden sind, aufweisen. Die Fahrwerkachsen könnten auch als Tragachsen oder Träger bezeichnet werden. Sie sind günstigerweise in sich längserstreckt. Auf dem Fahrwerk wird in an sich bekannter Art und Weise das Transportfahrzeug angeordnet. In bevorzugten Ausgestaltungsformen sind an der Fahrwerkachse zwei Schwenkarme mit jeweils einer Laufrolle mittels jeweils eines Schwenkgelenkes schwenkbar gelagert. Jede Laufrolle ist dabei bevorzugt zum Abrollen auf einer der Schienen in dem jeweiligen Schwenkarm um eine Laufrollenrotationsachse drehbar gelagert. Jeder Schwenkarm ist günstigerweise erfindungsgemäß zusätzlich mittels eines Stützlagers an der Fahrwerkachse abgestützt. Bevorzugt sind die Schwenkarme samt Laufrollen an einander gegenüberliegenden Enden der Fahrwerkachse angeordnet. Günstigerweise ist vorgesehen, dass eine Schwenkachse des Schwenkgelenks, um die der Schwenkarm schwenkbar ist, parallel zu einer Abstützrichtung angeordnet ist, wobei der Schwenkarm mittels des Stützlagers in der Abstützrichtung an der Fahrwerkachse abgestützt ist. Sowohl die Schwenkachse als auch die Abstützrichtung sind günstigerweise im Betrieb des Fahrwerks normal zu einer jeweiligen Oberfläche der Schienen angeordnet, auf der die Laufrollen jeweils abrollen. Bei dem Stützlager handelt es sich bevorzugt um ein Gleitlager, welches ein Verschwenken des Schwenkarms mittels des Schwenkgelenks zulässt. Günstig ist dabei, wenn das Gleitlager zwei Gleitoberflächen aufweist, welche beim Verschwenken des Schwenkarms aufeinander entlanggleiten. So kann das Gleitlager einerseits die durch die Auflast entstehenden Kräfte gut übertragen. Andererseits lässt es ein möglichst reibungsarmes Verschwenken des Schwenkarms samt Laufrolle zu, damit das Fahrwerk bzw. das Transportfahrzeug möglichst reibungsarm auch um Kurven des Schienensystems fahren kann.

Die Reibkoeffizienten im Gleitlager bzw. zwischen den Gleitoberflächen liegen, bezogen auf die Haftreibung, bevorzugt im Bereich von 0,05 bis 0,45. Um diese recht niedrigen Reibkoeffizienten zu erreichen, sehen bevorzugte Varianten vor, dass eine der Gleitoberflächen Metall, vorzugsweise Stahl, aufweist oder aus Metall, vorzugsweise Stahl, besteht und die andere der Gleitoberflächen Kunststoff aufweist oder aus Kunststoff besteht. Es kommen dabei z.B. als Kunststoff Polyamide, Polyoxymethylen (POM), Polyphenylensulfid (PPS), Polyethylenterephthalat (PET), Polybutylenterephthalat (PBT), Polyolefine, insbesondere High Density Polyethylene (HD-PE) oder Ultra High Molecular Weight Polyethylene (UHMW-PE), Polyketon oder Polyetheretherketon (PEEK) in Frage. Besonders bevorzugt sieht das Gleitlager eine inkorporierte Schmierung auf. Als inkorporierte Schmierstoffe im Gleitlager können z.B. Fluorpolymere, Polyolefine oder Silikone zum Einsatz kommen.

Die Gleitoberflächen sind günstigerweise zumindest bereichsweise, vorzugsweise vollständig eben ausgebildet. Eine Flächennormale auf den ebenen Bereich einer der Gleitoberflächen ist günstigerweise parallel der Schwenkachse des Schwenkgelenks, um die der Schwenkarm schwenkbar ist, angeordnet. Bevorzugt gilt dies für beide Gleitflächen.

Bei erfindungsgemäßen Fahrwerken ist vorgesehen, dass die Laufrollenrotationsachsen jeweils orthogonal zur Schwenkachse des Schwenkgelenks, um die der jeweilige Schwenkarm schwenkbar ist, angeordnet sind.

Bevorzugte Varianten der Erfindung sehen vor, dass das Fahrwerk zusätzlich zumindest eine an der Fahrwerkachse angeordnete Führungsrolle aufweist, welche mittels einer Vorspannvorrichtung elastisch in Richtung hin zur Schiene vorgespannt ist. Die Führungsrollen sorgen dafür, dass das Fahrwerk mit seinen Laufrollen immer optimal entlang der Schienen geführt ist.

Die Laufrollenrotationsachse einer jeweiligen Laufrolle steht günstigerweise orthogonal zur Führungsrollenrotationsachse einer entsprechenden Führungsrolle. Besonders bevorzugt ist auch vorgesehen, dass eine zur Schiene weisende Lauffläche der Laufrolle orthogonal zu einer entsprechenden, zur Schiene weisenden Lauffläche der Führungsrolle angeordnet ist. Als Vorspannvorrichtung ist in bevorzugten Varianten eine Schraubenfeder vorgesehen, welche die Führungsrolle in Richtung hin zur Schiene vorspannt. Günstigerweise wird die Führungsrolle linear von der Vorspannvorrichtung in einer Richtung normal zur Schiene vorgespannt. Die von der Vorspannvorrichtung aufgebrachte Federkraft liegt günstigerweise im Bereich zwischen 0 und 1000 Newton.

Im Sinne einer möglichst optimalen Laufruhe ist vorgesehen, dass in die Vorspannvorrichtung ein Schwingungsdämpfer integriert ist. Es kann sich hierbei z.B. um einen pneumatischen Dämpfer handeln. Besonders bevorzugt ist innerhalb des Dämpfergehäuses des Schwingungsdämpfers eine, Feder, insbesondere Schraubenfeder, der Vorspannvorrichtung angeordnet. Zur Ausführung der Dämpfungsfunktion kann das Dämpfergehäuse mittels zumindest einer Drosselöffnung mit der Umgebung in Verbindung stehen. Die durch die Drosselöffnung hindurchgedrückte Luft erzeugt dann den gewünschten Dämpfungseffekt. Besonders bevorzugte Varianten sehen vor, dass die Vorspannvorrichtung, vorzugsweise werkzeuglos, an der Fahrwerkachse befestigbar und von dieser abnehmbar ist.

Während beim Stand der Technik die Fahrwerkachsen üblicherweise aus Metall ausgeführt sind, sehen bevorzugte Varianten der Erfindung vor, dass die Fahrwerkachse zumindest größtenteils aus einem Kunststoff besteht. Besonders bevorzugt handelt es sich dabei um einen faserverstärkten Kunststoff. Geeignete Kunststoffe hierfür sind z.B. Polyamide, Polypropylen (PP), Polyethylenterephthalat (PET), Polybutylenterephthalat (PBT), Polyoxymethylen (POM), Polyphenylensulfid (PPS) oder Polyetheretherketon (PEEK). Das Elastizitätsmodul der Fahrwerkachse liegt günstigerweise im Bereich zwischen 2000 MPa (MegaPascal) und 40.000 MPa. Als Fasern kommen bei faserverstärkten Kunststoffen z.B. Glasfasern, Kohlefasern, Aramidfasern und/oder auch Basaltfasern in Frage.

Aufgrund des erfindungsgemäß eingesetzten zusätzlichen Stützlagers kann das Schwenkgelenk, mit dem der Schwenkarm schwenkbar an der Fahrwerkachse gelagert ist, relativ einfach ausgeführt sein. Es kann z.B. zur Ermöglichung der Schwenkbewegung ein einfaches Schwenkgleitlager aufweisen. Auch hier ist günstigerweise vorgesehen, dass eine der Gleitoberflächen dieses Schwenkgleitlagers Metall, vorzugsweise Stahl, aufweist oder aus Metall, vorzugsweise Stahl, besteht und die andere der Gleitoberflächen dieses Schwenkgleitlagers Kunststoff aufweist oder aus Kunststoff besteht. Auch hier können günstigerweise die oben bereits bezüglich des Gleitlagers genannten Kunststoffe und/oder inkorporierten Schmierstoffe eingesetzt werden.

Weitere Merkmale und Einzelheiten bevorzugter Ausgestaltungsformen der Erfindung werden nachfolgend exemplarisch anhand einer Ausführungsvariante der Erfindung erläutert. Es zeigen:
- Fig. 1: eine Fahrwerkachse eines erfindungsgemäßen Fahrwerkes auf zwei Schienen in einer perspektivischen Ansicht;
- Fig. 2: eine Frontalansicht hierzu;
- Fig. 3: einen Längsschnitt durch die Fahrwerkachse zu Fig. 2;
- Fig. 4: den Bereich A aus Fig. 3 vergrößert;
- Fig. 5: eine stirnseitige Ansicht auf die Fahrwerkachse samt Schwenkarm und Laufrolle;
- Fig. 6: einen Schnitt zu Fig. 5 und
- Fig. 7 bis 10: Darstellungen zu bevorzugten Ausgestaltungsformen einer Führungsrolle an einer solchen Fahrwerkachse.

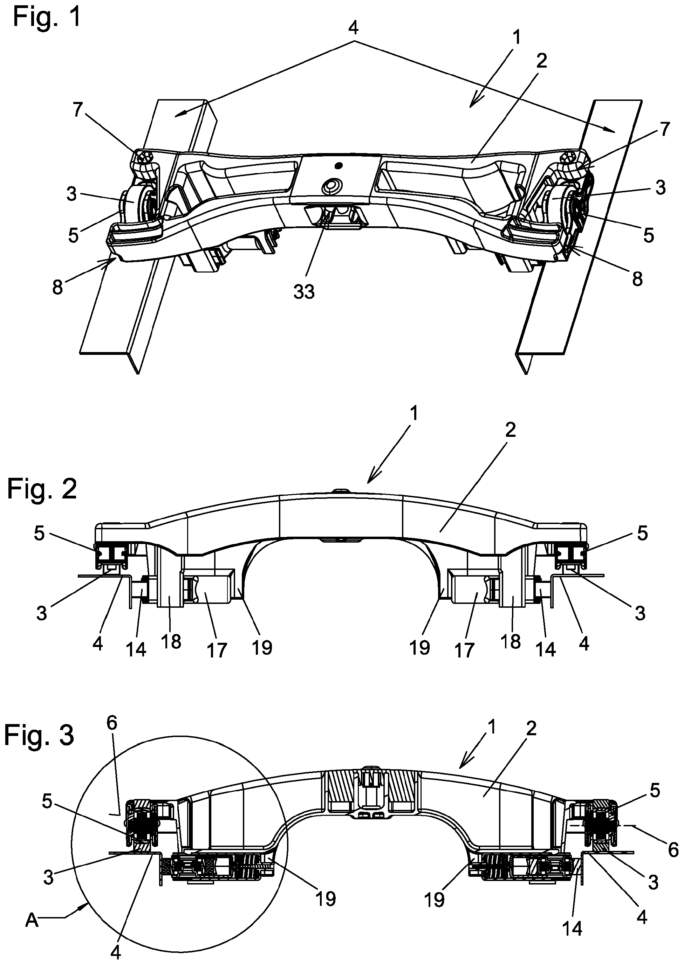

Fig. 1 zeigt eine Fahrwerkachse 2 eines erfindungsgemäßen Fahrwerks 1, welche mit ihren Laufrollen 3 auf zwei Schienen 4 entlangrollen kann. Das Fahrwerk 1 kann aus einer einzigen solchen Fahrwerkachse 2 bestehen. Über den Anschluss 33 können aber z.B. mittels zumindest eines Längsträgers oder dergleichen auch mehrere solche Fahrwerkachsen 2 zu einem Fahrwerk 1 miteinander verbunden sein. Auf dem Fahrwerk 1 ist ein entsprechendes Transportfahrzeug zum Transport von Waren, insbesondere in der Intralogistik, befestigt. Das Transportfahrzeug ist beim Stand der Technik in unterschiedlichsten Ausgestaltungsformen an sich bekannt und ist hier nicht dargestellt. Erfindungsgemäße Fahrwerke (1) können in unterschiedlichsten Ausgestaltungsformen ausgeformt sein. Die Fahrwerkachse(n) 2 kann/können auch direkt in einem Boden des Transportfahrzeugs oder dergleichen integriert sein.

Im gezeigten Ausführungsbeispiel weist das Fahrwerk 1 zwei lasttragende Laufrollen 3 auf. Die Laufrollen 3 sind zum Abrollen auf jeweils einer der Schienen 4 jeweils in einem Schwenkarm 5 um eine Laufrollenrotationsachse 6 drehbar gelagert. Die Schwenkarme 5 sind jeweils samt Laufrollen 3 mittels eines Schwenkgelenkes 7 schwenkbar an der Fahrwerkachse 2 gelagert. Erfindungsgemäß ist vorgesehen, dass die Schwenkarme 5 jeweils zusätzlich mittels eines Stützlagers 8 an der Fahrwerkachse 2 abgestützt sind und die Laufrollen 3 zwischen dem Schwenkgelenk 7 und dem Stützlager 8 angeordnet sind. Fig. 2 zeigt eine Frontalansicht auf die Fahrwerkachse 2, Fig. 3 einen Längsschnitt durch diese Fahrwerkachse 2.

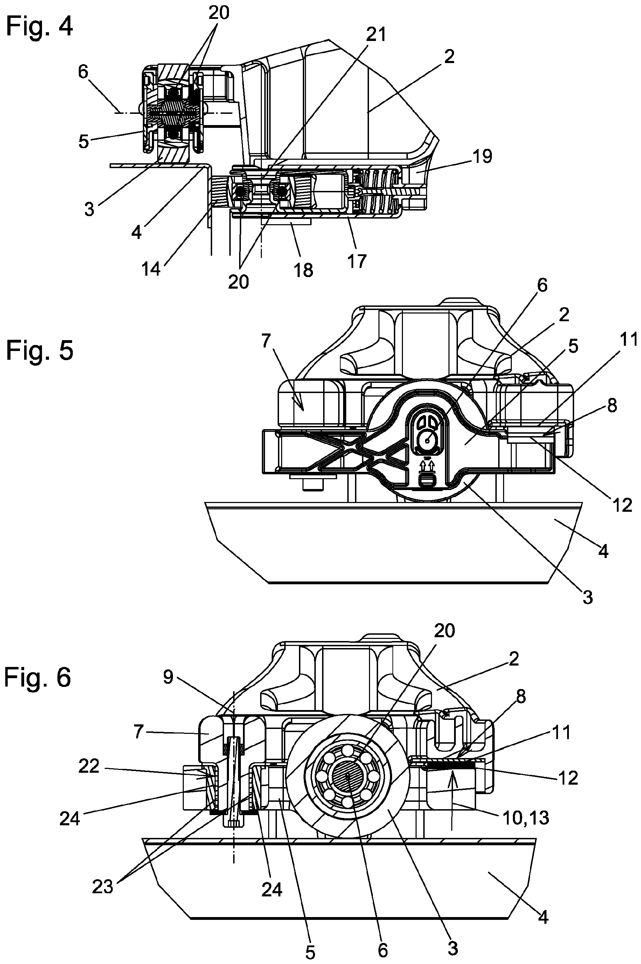

Zusätzlich weist das Fahrwerk 1 in diesem Ausführungsbeispiel 2 an der Fahrwerkachse 2 angeordnete Führungsrollen 14 auf, welche mittels einer später noch im Detail erläuterten Vorspannvorrichtung 15 elastisch in Richtung hin zu der jeweiligen Schiene 4, an der sie anliegen, vorgespannt sind. Fig. 4 zeigt den Bereich A aus Fig. 3 vergrößert. In dieser Schnittdarstellung gemäß Fig. 4 ist zunächst gut zu erkennen, dass in diesem Ausführungsbeispiel die Laufrolle 3 mittels eines Kugellagers 20 um ihre Laufrollenrotationsachse 6 drehbar am Schwenkarm 5 gelagert ist. Auch die Führungsrolle 14 ist mittels eines Kugellagers 20 um ihre Führungsrollenrotationsachse 21 drehbar gelagert. Die Kugellager 20 können natürlich auch durch andere geeignete Lager ersetzt werden. Die Laufrollenrotationsachse 6 und die Führungsrollenrotationsachse 21 stehen, wie hier gezeigt, bevorzugt orthogonal zueinander. Das Gleiche gilt bevorzugt auch für die Laufflächen der Laufrolle 3 einerseits und der Führungsrolle 14 andererseits. Die Schienen 4 sind im Querschnitt, wie hier gezeigt, günstigerweise entsprechend rechtwinkelig gebogen ausgebildet.

Die erfindungsgemäße Ausbildung des Fahrwerks 1 ist besonders gut in der stirnseitigen Ansicht gemäß Fig. 5 und in der dazu parallel angeordneten Schnittansicht in Fig. 6 zu sehen. Hier ist gut zu erkennen, dass der Schwenkarm 5 einerseits mittels des Schwenkgelenkes 7 schwenkbar an der Fahrwerkachse 2 gelagert und andererseits zusätzlich mittels eines Stützlagers 8 an der Fahrwerkachse 2 abgestützt ist, wobei die Laufrolle 3 zwischen dem Schwenkgelenk 7 und dem Stützlager 8 angeordnet ist. Hierdurch werden die auf dem Fahrwerk 1 bzw. auf der Fahrwerkachse 2 aufliegenden Auflasten symmetrisch auf beiden Seiten der Laufrolle in den Schwenkarm 5 eingetragen, sodass im Schwenkgelenk 7 auf beim Stand der Technik sonst notwendige teure Schrägkugellager verzichtet werden kann. Die Schwenkachse 9 des Schwenkgelenks 7, um die der Schwenkarm 5 schwenkbar ist, verläuft in diesem bevorzugten Ausführungsbeispiel parallel zu der Abstützrichtung 10. In dieser Abstützrichtung 10 ist der Schwenkarm 5 mittels des Stützlagers 8 an der Fahrwerkachse 2 abgestützt.

Das Stützlager 8 ist in bevorzugten Ausgestaltungsformen, wie der hier gezeigten, als Gleitlager ausgeführt. Es lässt ein Verschwenken des Schwenkarms 5 mittels des Schwenkgelenks 7 zu. Das Gleitlager weist zwei Gleitoberflächen 11 und 12 auf, welche beim Verschwenken des Schwenkarms 5 um die Schwenkachse 9 aufeinander entlanggleiten. Im Sinne eines möglichst niedrigen Reibungskoeffizienten sehen bevorzugte Varianten, wie die hier gezeigte, vor, dass eine der Gleitoberflächen, hier die Gleitoberfläche 11 an der Fahrwerkachse 2 aus Metall, insbesondere aus Stahl, ausgeführt ist. Die andere der Gleitoberflächen, hier die Gleitoberfläche 12 am Schwenkarm 5 ist günstigerweise aus einem Kunststoff ausgeführt. Geeignete Kunststoffe wurden eingangs genannt. Der Reibungskoeffizient liegt günstigerweise in dem eingangs genannten Wertebereich. Im gezeigten Ausführungsbeispiel sind beide Gleitoberflächen 11 und 12 eben ausgeführt. Die Flächennormale 13 auf die ebenen Bereiche der Gleitflächen 11 und 12 verläuft parallel zu der Schwenkachse 9 des Schwenkgelenkes 7. Die Laufrollenrotationsachse 6 hingegen verläuft orthogonal zur Schwenkachse 9.

Das Schwenkgelenk 7 kann aufgrund der Erfindung auch relativ einfach ausgebildet sein. Im gezeigten Ausführungsbeispiel weist es ein Schwenkgleitlager 22 auf, bei dem zwei Oberflächen 23 und 24 aneinander gleiten, um die Schwenkbewegung zuzulassen. Eine der Oberflächen, hier die Oberfläche 23, ist günstigerweise wiederum aus Metall, inbesondere Stahl ausgebildet, die andere der Oberflächen, hier die Oberfläche 24, besteht wiederum günstigerweise aus Kunststoff. Sowohl bei den Oberflächen 23 und 24 dieses Schwenkgleitlagers 22 als auch bei den Gleitoberflächen 11 und 12 des Stützlagers 8 sind günstigerweise Schmierungen inkorporiert. Wie dies konkret ausgestaltet sein kann, wurde eingangs bereits erläutert.

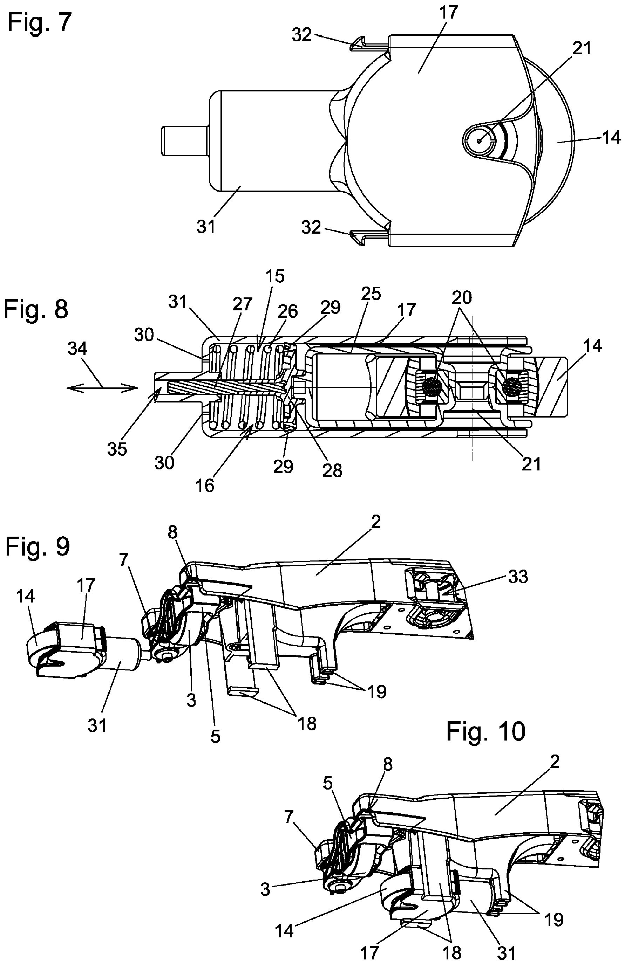

Die Fig. 7 bis 10 zeigen eine bevorzugte, hier bei diesem Ausführungsbeispiel zum Einsatz kommende Ausgestaltungsform einer Führungsrolle 14, welche von einer Vorspannvorrichtung 15 gegen die Schiene gedrückt wird. Zusätzlich weist diese Vorspannvorrichtung 15 auch einen Schwingungsdämpfer 16 auf. Fig. 7 zeigt eine Ansicht von außen auf das Gehäuse 17 bzw. Druckstück, in dem die um ihre Führungsrollenrotationsachse 21 drehbare Führungsrolle 14 linear verschiebbar gelagert ist. In dem Längsschnitt gemäß Fig. 8 ist gut zu sehen, dass die Führungsrolle 14 mit ihrem Kugellager 20 in einem Rollenträger 25 drehbar gelagert ist. Dieser Rollenträger 25 ist zusammen mit der Führungsrolle 14 in Längsrichtung 34 verschiebbar im Gehäuse 17 gelagert. Die Vorspannvorrichtung 15 weist hier eine schraubenförmige Vorspannfeder 26 auf, welche den Teller 28 in Richtung von den Drosselöffnungen 30 weg vorspannt. Der Rollenträger 25 und damit die Führungsrolle 14 sind an diesem Teller 28 und damit an der Vorspannfeder 26 der Vorspannvorrichtung 15 abgestützt. Zur Führung des Tellers 28 ist an diesem auf der von der Führungsrolle 14 abgewandten Seite ein Dämpfungskolben 27 angeordnet, welcher in einem Führungskanal 35 des Dämpfergehäuses 31 in der Längsrichtungen 34 verschiebbar gelagert ist. Das Dämpfergehäuse 31 ist hier als ein Teilbereich des Gehäuses 17 ausgeführt, was aber natürlich nicht zwingend so sein muss. Im hier gezeigten Ausführungsbeispiel ist der Teller 28 jedenfalls gegen das Dämpfergehäuse 31 mittels der Dichtung 29 abgedichtet. Auf der von der Führungsrolle 14 abgewandten Seite des Tellers 28 wird so im Dämpfergehäuse 31 eine Druckkammer gebildet, welche nur über die Drosselöffnungen 30 mit der Umgebung in Verbindung steht. Dieses Teilvolumen zwischen dem Teller 28 und den Drosselöffnungen 30 innerhalb des Dämpfergehäuses 31 bildet in diesem Ausführungsbeispiel einen pneumatischen Schwingungsdämpfer 16. Die Öffnungsquerschnitte der Drosselöffnungen 30 können so gewählt werden, dass der gewünschte Dämpfungseffekt erzielt wird. Die Dämpfungswirkung entsteht dabei beim Zusammendrücken und damit beim Verkleinern des Teilvolumens zwischen Teller 28 und Drosselöffnungen 30, indem die Luft nur gebremst durch die Drosselöffnungen 30 nach außen entweichen kann. Andersherum haben die Drosselöffnungen 30 auch eine drosselnde Wirkung beim Eintritt der Luft von außen in das Teilvolumen zwischen Teller 28 und Drosselöffnung 30, sodass auch in diese Richtung die gewünschte Dämpfungswirkung entsteht. Die Integration von Vorspannvorrichtung 15 und Schwingungsdämpfer 16 ergibt sich in diesem Ausführungsbeispiel somit dadurch, dass einerseits die Vorspannfeder 26 im Innenraum des Dämpfergehäuses 31 angeordnet ist, und andererseits der beschriebene Schwingungsdämpfer 16 so auch mit der Vorspannvorrichtung 15 zwangsgekoppelt ist.

Die in Fig. 7 sichtbaren Begrenzungsnasen 32 dienen lediglich der verschiebbaren Befestigung des Rollenträgers 25 im Gehäuse 17.

Angemerkt wird noch, dass die hier beispielhaft gezeigte Variante der Vorspannvorrichtung 15 linear in einer Längsrichtung 34 auf die Führungsrolle 14 wirkt, um diese an die Schiene 4 anzudrücken.

In den Fig. 9 und 10 ist noch veranschaulicht, dass in diesem Ausführungsbeispiel die Führungsrolle 14 mit ihrem Gehäuse 17 bzw. Druckstück werkzeuglos an der Fahrwerkachse 2 befestigbar und von dieser auch wieder abnehmbar ist. Im konkret gezeigten Ausführungsbeispiel wird dies dadurch erreicht, dass das Gehäuse 17 zwischen Befestigungsklammern 18 und einer Abstützung 19 der Fahrwerkachse 2 gehalten wird und so jederzeit von der Fahrwerkachse 2 abgenommen und durch eine andere Führungsrolle 14 mit ihrem Gehäuse 17, gegebenenfalls mit stärkerer oder schwächerer Vorspannvorrichtung 15, ausgetauscht werden kann.

Abschließend wird noch darauf hingewiesen, dass in diesem Ausführungsbeispiel die Fahrwerkachse 2 bevorzugt zumindest größtenteils aus einem Kunststoff, besonders bevorzugt aus einem faserverstärkten Kunststoff besteht. Hierdurch kann die Fahrwerkachse sehr leicht und trotzdem sehr stabil gebaut werden, wodurch die beim Beschleunigen und Abbremsen des Transportfahrzeuges zu überwindenden Trägheitskräfte verringert werden. Außerdem sind solche Fahrwerkachsen aus Kunststoff oder faserverstärktem Kunststoff relativ günstig herstellbar.

### Legende zu den Hinweisziffern:

| | | | |
|---|---|---|---|
| 1 | Fahrwerk | 28 | Teller |
| 2 | Fahrwerkachse | 29 | Dichtung |
| 3 | Laufrolle | 30 | Drosselöffnung |
| 4 | Schiene | 31 | Dämpfergehäuse |
| 5 | Schwenkarm | 32 | Begrenzungsnasen |
| 6 | Laufrollenrotationsachse | 33 | Anschluss |
| | | 34 | Längsrichtung |
| 7 | Schwenkgelenk | 35 | Führungskanal |
| 8 | Stützlager | | |
| 9 | Schwenkachse | | |
| 10 | Abstützrichtung | | |
| 11 | Gleitoberfläche | | |
| 12 | Gleitoberfläche | | |
| 13 | Flächennormale | | |
| 14 | Führungsrolle | | |
| 15 | Vorspannvorrichtung | | |
| 16 | Schwingungsdämpfer | | |
| 17 | Gehäuse | | |
| 18 | Befestigungsklammer | | |
| 19 | Abstützung | | |
| 20 | Kugellager | | |
| 21 | Führungsrollenrotationsachse | | |
| 22 | Schwenkgleitlager | | |
| 23 | Oberfläche | | |
| 24 | Oberfläche | | |
| 25 | Rollenträger | | |
| 26 | Vorspannfeder | | |
| 27 | Dämpfungskolben | | |

## Patentansprüche

1. Fahrwerk (1) für ein schienengebundenes Transportfahrzeug zum Transport von Waren, insbesondere in der Intralogistik, wobei das Fahrwerk (1) zumindest eine Fahrwerkachse (2) und zumindest zwei lasttragende Laufrollen (3) aufweist, wobei die Laufrollen (3) jeweils zum Abrollen auf einer Schiene (4) in einem Schwenkarm (5) um eine Laufrollenrotationsachse (6) drehbar gelagert sind und der Schwenkarm (5) samt Laufrolle (3) jeweils mittels eines Schwenkgelenks (7) schwenkbar an der Fahrwerkachse (2) gelagert ist, und der Schwenkarm (5) jeweils zusätzlich mittels eines Stützlagers (8) an der Fahrwerkachse (2) abgestützt ist und die Laufrollen (3) jeweils zwischen dem Schwenkgelenk (7) und dem Stützlager (8) angeordnet sind, **dadurch gekennzeichnet, dass** die Laufrollenrotationsachsen (6) jeweils orthogonal zur Schwenkachse (9) des Schwenkgelenks (7), um die der jeweilige Schwenkarm (5) schwenkbar ist, angeordnet sind.

2. Fahrwerk (1) nach Anspruch 1, **dadurch gekennzeichnet, dass** die Schwenkachse (9) des Schwenkgelenks (7), um die der jeweilige Schwenkarm (5) schwenkbar ist, parallel zu einer Abstützrichtung (10) angeordnet ist, wobei der Schwenkarm (5) mittels des jeweiligen Stützlagers (8) in der Abstützrichtung (10) an der Fahrwerkachse (2) abgestützt ist.

3. Fahrwerk (1) nach Anspruch 1 oder 2, **dadurch gekennzeichnet, dass** das jeweilige Stützlager (8) ein Gleitlager ist, welches ein Verschwenken des jeweiligen Schwenkarms (5) mittels des jeweiligen Schwenkgelenks (7) zulässt.

4. Fahrwerk (1) nach Anspruch 3, **dadurch gekennzeichnet, dass** das jeweilige Gleitlager zwei Gleitoberflächen (11, 12) aufweist, welche beim Verschwenken des jewiligen Schwenkarms (5) aufeinander entlanggleiten.

5. Fahrwerk (1) nach Anspruch 4, **dadurch gekennzeichnet, dass** eine der Gleitoberflächen (11) Metall, vorzugsweise Stahl, aufweist oder aus Metall, vorzugsweise Stahl, besteht und die andere der Gleitoberflächen (12) Kunststoff aufweist oder aus Kunststoff besteht.

6. Fahrwerk (1) nach Anspruch 4 oder 5, **dadurch gekennzeichnet, dass** die Gleitoberflächen (11, 12) zumindest bereichsweise, vorzugsweise vollständig, eben ausgebildet sind und eine Flächennormale (13) auf den ebenen Bereich einer der Gleitoberflächen (11, 12) parallel zu der jeweiligen Schwenkachse (9) des Schwenkgelenks (7), um die der jeweilige Schwenkarm (5) schwenkbar ist, angeordnet ist.

7. Fahrwerk (1) nach einem der Ansprüche 1 bis 6, **dadurch gekennzeichnet, dass** das Fahrwerk (1) zusätzlich zumindest eine an der Fahrwerkachse (2) angeordnete Führungsrolle (14) aufweist, welche mittels einer Vorspannvorrichtung (15) elastisch in Richtung hin zur Schiene (4) vorgespannt ist.

8. Fahrwerk (1) nach Anspruch 7, **dadurch gekennzeichnet, dass** in die Vorspannvorrichtung (15) ein Schwingungsdämpfer (16) integriert ist und/oder dass die Vorspannvorrichtung (15), vorzugsweise werkzeuglos, an der Fahrwerkachse (2) befestigbar und abnehmbar ist.

9. Fahrwerk (1) nach einem der Ansprüche 1 bis 8, **dadurch gekennzeichnet, dass** die Fahrwerkachse (2) zumindest größtenteils aus einem Kunststoff, vorzugsweise aus einem faserverstärkten Kunststoff, besteht.

## Claims

1. Bogie (1) for a rail-bound transportation vehicle for transporting goods, in particular in intralogistics, the bogie (1) having at least one bogie axle (2) and at least two load-bearing bogie wheels (3), the bogie wheels (3) each being mounted in a pivot arm (5) so as to be rotatable about a bogie wheel axis of rotation (6) in order to roll on a rail (4) and each pivot arm (5) together with the bogie wheel (3) being pivotably mounted on the bogie axle (2) by means of a pivot joint (7), and each pivot arm (5) additionally being supported on the bogie axle (2) by means of a support bearing (8) and the bogie wheels (3) each being arranged between the pivot joint (7) and the support bearing (8), **characterised in that** the bogie wheel axes of rotation (6) are each arranged orthogonally to the pivot axis (9) of the pivot joint (7) about which the particular pivot arm (5) is pivotable.

2. Bogie (1) according to claim 1, **characterised in that** the pivot axis (9) of the pivot joint (7) about which the particular pivot arm (5) is pivotable is arranged in parallel with a support direction (10), the pivot arm (5) being supported on the bogie axle (2) in the support direction (10) by means of the particular support bearing (8).

3. Bogie (1) according to claim 1 or claim 2, **characterised in that** each support bearing (8) is a sliding bearing that allows the particular pivot arm (5) to pivot by means of the relevant pivot joint (7).

4. Bogie (1) according to claim 3, **characterised in that** each sliding bearing has two slide surfaces (11, 12) which slide along one another when the particular pivot arm (5) pivots.

5. Bogie (1) according to claim 4, **characterised in that** one of the slide surfaces (11) comprises metal, preferably steel, or consists of metal, preferably steel, and the other slide surface (12) comprises plastics material or consists of plastics material.

6. Bogie (1) according to claim 4 or claim 5, **characterised in that** the slide surfaces (11, 12) are formed in a planar manner at least in some regions, preferably in their entirety, and a surface normal (13) to the planar region of one of the slide surfaces (11, 12) is arranged in parallel with the particular pivot axis (9) of the pivot joint (7) about which the particular pivot arm (5) is pivotable.

7. Bogie (1) according to any of claims 1 to 6, **characterised in that** the bogie (1) additionally comprises at least one guide roller (14) which is arranged on the bogie axle (2) and is resiliently biased towards the rail (4) by means of a biasing device (15).

8. Bogie (1) according to claim 7, **characterised in that** a vibration damper (16) is integrated in the biasing device (15) and/or **in that** the biasing device (15) can be fastened to and detached from the bogie axle (2), preferably without the use of tools.

9. Bogie (1) according to any of claims 1 to 8, **characterised in that** the bogie axle (2) consists at least in large part of a plastics material, preferably of a fibre-reinforced plastics material.

## Revendications

1. Dispositif de roulement (1) pour un véhicule de transport sur rails pour le transport de marchandises, en particulier dans le domaine de l'intralogistique, le dispositif de roulement (1) étant muni d'au moins un axe de dispositif de roulement (2) et d'au moins deux galets de roulement (3) portant la charge, les galets de roulement (3) étant logés chacun, pour rouler sur un rail (4), dans un bras pivotant (5) de manière à pouvoir tourner autour d'un axe de rotation des galets de roulement (6), et le bras pivotant (5), avec les galets de roulement (3), étant logés chacun sur l'axe de dispositif de roulement (2) de manière à pouvoir pivoter au moyen d'une articulation pivotante (7), et le bras pivotant (5) étant en outre en appui sur l'axe du dispositif de roulement (2) au moyen d'un palier d'appui (8), et les galets de roulement (3) étant disposés chacun entre l'articulation pivotante (7) et le palier d'appui (8), **caractérisé en ce que** les axes de rotation des galets de roulement (6) sont disposés orthogonalement à l'axe de pivotement (9) de l'articulation pivotante (7) autour duquel le bras pivotant (5) correspondant peut pivoter.

2. Dispositif de roulement (1) selon la revendication 1, **caractérisé en ce que** l'axe de pivotement (9) de l'articulation pivotante (7), autour duquel le bras pivotant (5) correspondant peut pivoter, est disposé parallèlement à une direction d'appui (10), le bras pivotant (5) étant en appui sur l'axe de dispositif de roulement (2) dans la direction d'appui (10) au moyen du palier d'appui (8) correspondant.

3. Dispositif de roulement (1) selon la revendication 1 ou 2, **caractérisé en ce que** chaque palier d'appui (8) est un palier lisse qui permet, au moyen de l'articulation pivotante (7) correspondante, un pivotement du bras pivotant (5) correspondant.

4. Dispositif de roulement (1) selon la revendication 3, **caractérisé en ce que** chaque palier lisse est muni de deux surfaces de glissement (11, 12) qui glissent l'une sur l'autre lors du pivotement du bras pivotant (5) correspondant.

5. Dispositif de roulement (1) selon la revendication 4, **caractérisé en ce que** l'une des surfaces de glissement (11) présente du métal, de préférence de l'acier, ou est constituée de métal, de préférence d'acier, et l'autre des surfaces de glissement (12) présente une matière plastique ou est constituée de matière plastique.

6. Dispositif de roulement (1) selon la revendication 4 ou 5, **caractérisé en ce que** les surfaces de glissement (11, 12) sont au moins en partie planes, de préférence complètement, et une normale à la surface (13) sur la zone plane de l'une des surfaces de glissement (11, 12) est disposée parallèlement à l'axe de pivotement (9) correspondant de l'articulation pivotante (7) autour duquel le bras pivotant (5) correspondant peut pivoter.

7. Dispositif de roulement (1) selon l'une des revendications 1 à 6, **caractérisé en ce que** le dispositif de roulement (1) est muni en outre d'au moins un galet de guidage (14) disposé sur l'axe de dispositif de roulement (2), lequel galet de guidage est précontraint élastiquement en direction du rail (4) au moyen d'un dispositif de précontrainte (15).

8. Dispositif de roulement (1) selon la revendication 7, **caractérisé en ce qu'**un amortisseur de vibrations (16) est intégré dans le dispositif de précontrainte (15), et/ou **en ce que** le dispositif de précontrainte (15) peut être fixé à l'axe du dispositif de roulement (2), de préférence sans outil, et peut en être retiré.

9. Dispositif de roulement (1) selon l'une des revendications 1 à 8, **caractérisé en ce que** l'axe de dispositif de roulement (2) est constitué au moins en grande partie d'une matière plastique, de préférence d'une matière plastique renforcée par des fibres.
